# EUROPÄISCHE PATENTSCHRIFT

(11) **EP 2 867 628 B1**
(45) Veröffentlichungstag und Bekanntmachung des Hinweises auf die Patenterteilung: **13.11.2019**
(21) Anmeldenummer: 13734044.4
(22) Anmeldetag: 01.07.2013
(51) Int. Cl.: G01F 1/075, G01F 15/14, G01F 15/18

(54) **DURCHFLUSSMESSER**
FLOW METER
DÉBITMÈTRE

(30) Priorität: 02.07.2012 EP 12174615
(43) Veröffentlichungstag der Anmeldung: 06.05.2015
(73) Patentinhaber: DIGMESA AG, 2563 Ipsach (CH)
(72) Erfinder: LAUBER, Stefan, 2502 Biel (CH); SCHNEIDER, Stefan, 3510 Konolfingen (CH); SIGRIST, Martin, 3005 Bern (CH); RUSCH, Christoph, 2560 Nidau (CH); FRELY, Jean-Claude, 2504 Biel (CH)
(74) Vertreter: Liebetanz, Michael
(86) Internationale Anmeldenummer: PCT/EP2013/063844
(87) Internationale Veröffentlichungsnummer: WO 2014/006001

(56) Entgegenhaltungen:
- EP-A1- 0 447 811
- EP-A1- 2 166 316
- WO-A1-2010/149601
- WO-A1-2011/055362
- DE-A1- 10 249 566

## Beschreibung

### TECHNISCHES GEBIET

Die vorliegende Erfindung betrifft einen Durchflussmesser für Flüssigkeiten, mit einem ein Flügelrad umschliessenden und dieses drehbar lagernden Messgehäuses, einem Zulaufrohr, einem Ablaufrohr, mindestens einem dem Flügelrad zugeordneten Sensorgeber und einem am Messgehäuse vorgesehenen, auf den Sensorgeber ansprechenden Sensor zur Ermittlung der durch das Messgehäuse durchströmenden Flüssigkeitsmenge aufgrund der Umdrehungen des Flügelrades.

### STAND DER TECHNIK

Ein Durchflussmesser mit einigen Merkmalen der eingangs genannten Art ist aus der GB 2,382,661 bekannt. Diese Patentanmeldung nutzt einen Sensor zur Feststellung des Halleffektes mit einem entsprechenden, dem Flügelrad zugeordneten Magneten. Dabei wird dieser Magnet insbesondere gegenüber älteren Modellen aus dem Weg der Flüssigkeit herausgenommen, da eine solche Anordnung nach Angaben dieser Schrift einen negativen Einfluss auf die Vorrichtung als solche hat und ein Ersatz der Magnete schwierig macht.

Bei der GB 2 382 661 wird der Magnet ausserhalb des Flüssigkeitslaufes angeordnet.

Aus der EP 2 166 316, die auf dieser britischen Druckschrift als Stand der Technik aufbaut, wird ein an das Messgehäuse angeformter Zuströmstutzen dazu verwendet, in diesen ein einen Düsenkanal bildendes Düsenrohr als Zusatzelement einzuschliessen.

Obwohl die genannten Druckschriften auf der Basis des Messprinzips des Halleffektes zufriedenstellend arbeiten, sind sie durch das zylindrische Messgehäuse mit angeformten Stutzen in ihren Dimensionen für Anwendungen mit sehr beschränktem Platz weniger geeignet.

Ein Durchflussmesser mit den Merkmalen der eingangs genannten Art ist aus der EP 2 154 490 bekannt. Dabei ist das Messgehäuse ein das Zulaufrohr und das Ablaufrohr einstückig umfassendes Rohr, in welchem zwischen Zulaufrohr und Ablaufrohr eine düsenbildende Verengung exzentrisch angeordnet ist. Das Flügelrad ist im für das Messgehäuse aufgeweitete Ablaufrohr drehbar gelagert, wobei das Flügelrad ungefähr doppelt so gross ist wie der Durchmesser von Zulaufrohr und Ablaufrohr. Eine Verengung des einstückigen Rohrs ist zentrisch vorgesehen. Der Nachteil dieses Standes der Technik liegt also unter anderem darin, dass der Platzbedarf für das über den Aussendurchmesser des aus Zulaufrohr und Ablaufrohr bestehenden Rohres hinausragende Messgehäuse gross ist und somit das durch den Querschnitt aus Zulaufrohr und/oder Ablaufrohr bestimmte Kreismass hinausragt.

Ähnliche Durchflussmesser sind aus der WO2011/055362 A1 bzw. der FR2 428 827 A1 bekannt. Die WO2011/055362 A1 setzt nach Figs. 6 und 7 ein Flügelrad in einem mehrteiligen Gehäuse ein, wobei dieses Flügelrad beidseitig von eine Durchflusspassage begrenzenden Rampen eingeschlossen ist.

### DARSTELLUNG DER ERFINDUNG

Ausgehend von diesem Stand der Technik liegt der Erfindung die Aufgabe zugrunde, einen Durchflussmesser der eingangsgenannten Art kleiner und leichter positionierbar auszugestalten. Insbesondere ist es ein Ziel der Erfindung, einen platzsparenden Durchflussmesser anzugeben, der in einfacher Weise in die Leitungslegung einer Heiss- oder Kaltgetränkezubereitungsvorrichtung eingebaut werden kann. Es ist in diesem Zusammenhang ein weiteres Ziel der vorliegenden Erfindung, die notwendige Elektrik und Elektronik als Steuereinheit kompakt und ohne zusätzlichen Platzbedarf beispielsweise durch Aufklipsen des Messgehäuserohrs mit dieser Steuereinheit zu verbinden.

Ein weiteres Ziel der vorliegenden Erfindung ist es, den Zusammenbau eines Durchflussmessers zu vereinfachen und weniger Teile zu verwenden.

Diese Ziele werden erfindungsgemäss für einen Durchflussmesser der eingangs genannten Art unter anderem mit den Merkmalen des Anspruchs 1 erreicht, wobei der Durchflussmesser für Flüssigkeiten ein ein Flügelrad umschliessendes und dieses drehbar lagerndes Messgehäuse aufweist, wobei das Messgehäuse selber aus einem Zulaufrohr und einem Ablaufrohr besteht. Dabei ist mindestens ein dem Flügelrad zugeordneter Sensorgeber und ein am Messgehäuse vorgesehenen, auf den Sensorgeber ansprechenden Sensor zur Ermittlung der durch das Messgehäuse durchströmenden Flüssigkeitsmenge aufgrund der Umdrehungen des Flügelrades vorgesehen. Das Messgehäuse ist ein das Zulaufrohr und das Ablaufrohr einstückig umfassendes Rohr, in dem zwischen Zulaufrohr und Ablaufrohr eine düsenbildende Verengung exzentrisch angeordnet ist. Das Flügelrad ist im Ablaufrohr hinter der düsenbildende Verengung drehbar gelagert. Dabei ist der dem Flügelrad entsprechende Aussendurchmesser kleiner als der Nenninnendurchmesser des Ablaufrohrs.

Der Sensor ist vorteilhafterweise ein Hallsensor.

Das Flügelrad verfügt erfindungsweise in der Draufsicht in axialer Rohrichtung in jeder Drehposition über eine Aussenfläche in der Weise, dass das Flügelrad in den durch den Innendurchmesser des Ablaufrohrs vorgegebenen Freiraum passt, wobei das Flügelrad über zwei Seitenwände verfügt, auf denen axial mittig jeweils ein Lagerelement vorgesehen ist, welches einem dem Ablaufrohr zugeordneten Drehlager zugeordnet ist. Die Achse des Drehlagers steht senkrecht zu der Längsachse des Rohrs und der Sensor ist vorteilhafterweise senkrecht zu den beiden genannten Achsen oberhalb oder unterhalb des Rohrs angebracht.

Vorteilhafterweise besteht das Lager aus jeweils einem Lagerkonus an den Enden der Drehachse, welche in entsprechenden Öffnungen als Drehlager in oder vor der Wand des Ablaufrohrs eingreifen.

Der Durchflussmesser kann mit einem Lagerkäfig versehen sein, wofür im Ablaufrohr mindestens zwei Befestigungselemente, beispielsweise Führungsrippen, vorgesehen sind, auf die der Lagerkäfig für das Flügelrad aufschiebbar ist. Diese Elemente dienen als Führungs- bzw. Positionierungselemente und schützen den Käfig vor Verdrehung und dienen gleichfalls dazu, ihn zu positionieren, Dieser Lagerkäfig wird vorteilhafterweise über Sperrrasten in seiner axialen Lage gehalten.

Der Lagerkäfig kann aus einem Ring bestehen, an dem gegenüberliegende Lagerarme angeformt sind, die im wesentlichen rechtwinklig von dem Ring abstehen. Ein Abweichen vom rechten Winkel kann insbesondere vom Anzug des Spritzwerkzeugs abhängig sein. In diesen Lagerarmen können die Lager vorgesehen sein. Die Lagerarme sind vorteilhafterweise in Richtung der Verengung vorgeschoben, so dass der Ring stromabwärts angeordnet ist. Prinzipiell ist auch die Lagerung in die entgegengesetzte Richtung möglich, aber die erstgenannte Lösung wird bevorzugt.

Das Flügelrad kann drei oder mehr Flügel haben. Die Zahl ist grundsätzlich nicht beschränkt; so können es vier, sechs, acht, neun, zehn oder eine andere Anzahl von Flügeln sein. Dabei kann das Flügelrad ein Spritzgussteil sein, wobei es mindestens in einem Flügel aus einem permanentmagnetischen Spritzgusskunststoff besteht. Das kann durch 2k-Spritzguss erreicht werden. Auch kann das gesamte Flügelrad aus dem permanentmagnetischen Spritzgusskunststoff ausgebildet sein, da die Magnetfeldänderungen durch die achsenfernen Flügel bestimmt werden.

Bei einer anderen Ausführungsform kann das Flügelrad ein Spritzgussteil sein, wobei mindestens ein Flügel einen mindestens teilumspritzten Permanentmagneten aufweist.

Dadurch, dass der Durchflussmesser vollständig in dem im wesentlichen rohrförmigen Messgehäuse angeordnet ist und somit das Messgehäuse ein "Messrohr" ist, besteht in einer Heiss- oder Kaltgetränkezubereitungsvorrichtung kein zusätzlicher Platzbedarf für die Verbindung von Schalteinheit und dem Messgehäuserohr, da dieses einfach in eine entsprechende kompatible lösbar oder unlösbare Rastelemente aufweisende Schalteinheit einsetzbar ist, wie ein Schlauch oder Rohr in eine Rohrschelle.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine teilweise aufgeschnittene perspektivische Ansicht eines Durchflussmessers gemäss einem Ausführungsbeispiel der Erfindung;
- Fig. 2: eine Schnittansicht auf die Schnittfläche der Fig. 1;
- Fig. 3: eine perspektivische Ansicht eines Flügelrades gemäss dem Ausführungsbeispiel der Fig. 1;
- Fig. 4: eine perspektivische Ansicht eines alternativen Flügelrades für ein Ausführungsbeispiel nach der Fig. 1;
- Fig. 5: einen Lagerkäfig für ein Flügelrad nach Fig. 3 oder 4 für einen Durchflussmesser nach Fig. 1;
- Fig. 6: eine teilweise aufgeschnittene perspektivische Ansicht eines alternativen Rohres für einen Durchflussmesser nach einem weiteren Ausführungsbeispiel der Erfindung;
- Fig. 7: eine teilweise aufgeschnittene perspektivische Ansicht eines alternativen Rohres mit einem eingesetzten Flügelrad für einen Durchflussmesser nach einem weiteren Ausführungsbeispiel der Erfindung;
- Fig. 8: eine perspektivische Ansicht des Sensorgehäuses des Durchflussmessers nach Fig. 1;
- Fig. 9: eine weitere perspektivische Ansicht des Sensorgehäuses nach Fig. 8;
- Fig. 10: eine perspektivische Ansicht des Messgehäuses des Durchflussmessers nach Fig. 1;
- Fig. 11: einen Querschnitt durch ein Messgehäuse mit einer im Ablaufrohr eingesetzten Durchflussblende;
- Fig. 12: eine perspektivische Ansicht der Durchflussblende aus Fig. 11;
- Fig. 13: eine Draufsicht auf die Durchflussblende aus Fig. 11;
- Fig. 14: einen Querschnitt durch ein Messgehäuse mit einer auf das Ablaufrohr aufgesetzten Durchflussblende;
- Fig. 15: eine perspektivische Ansicht der Durchflussblende aus Fig. 15; und
- Fig. 16: eine Draufsicht auf die Durchflussblende aus Fig. 16.

### BESCHREIBUNG BEVORZUGTER AUSFÜHRUNGSFORMEN

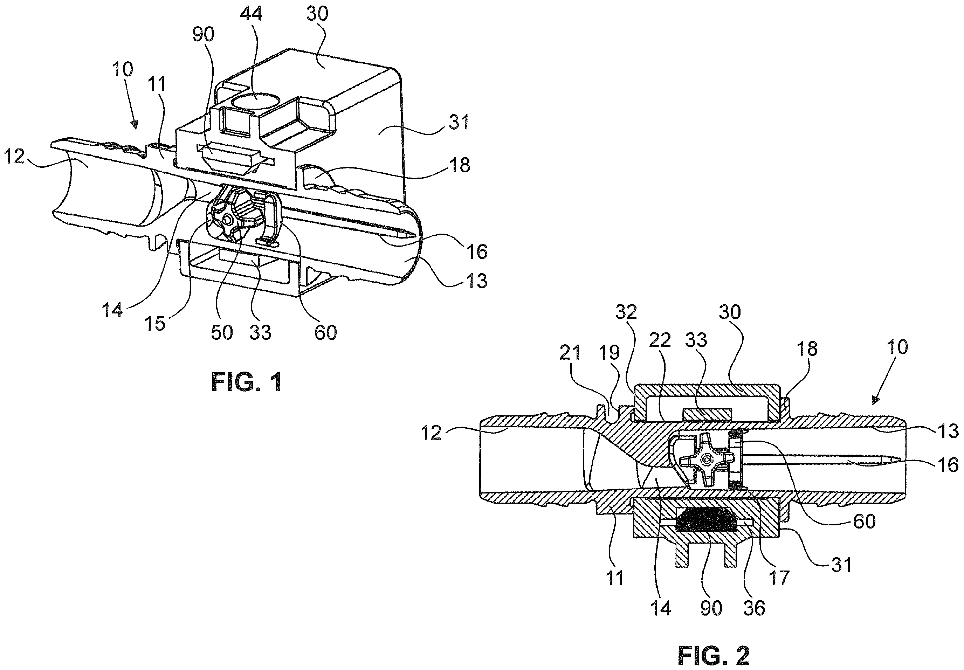

Die Fig. 1 zeigt eine teilweise aufgeschnittene perspektivische Ansicht eines Durchflussmessers gemäss einem Ausführungsbeispiel der Erfindung. Ein Messgehäuse 10 ist mit seinem Aussenrohr 11 in ein Sensorgehäuse 30 eingeschoben, wie es nachher noch genauer erläutert wird. Das Messgehäuse 10 ist rohrförmig und ist in keiner Weise verletzt, was bedeutet, dass es nur zwei Rohröffnungen 12 und 13 hat. Mit dem Bezugszeichen 12 ist das Zulaufrohr, mit dem gegenüberliegenden Bezugszeichen 13 ist das Ablaufrohr bezeichnet.

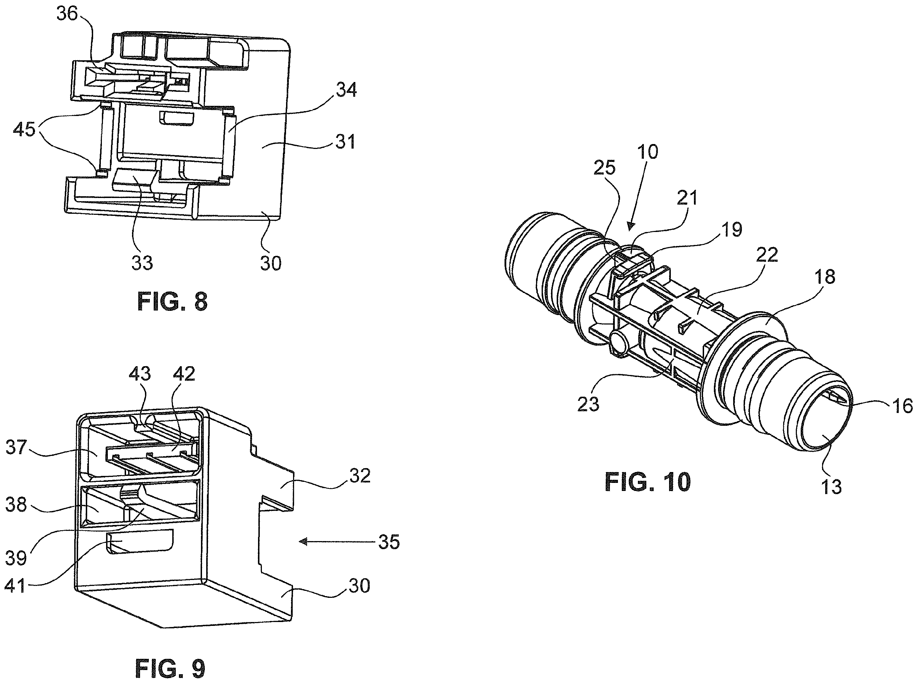

Mit der Schnittansicht der Fig. 2 auf die Schnittfläche der Fig. 1 kann erkannt werden, dass das Aussenrohr 11 über einen Flansch 18 verfügt, dem gegenüber ein Gegenflansch 19 angeordnet ist, welche zwischen den Aussenwänden 31 und 32 des Sensorgehäuses eingeschoben sind. Die Orientierung der Durchflussrichtung wird durch die Orientierungsnut 21 jenseits des Gegenflansches sichergestellt. Die Orientierung des Rohres 11 in Umfangsrichtung wird im Zusammenhang mit der Fig. 10 später beschrieben.

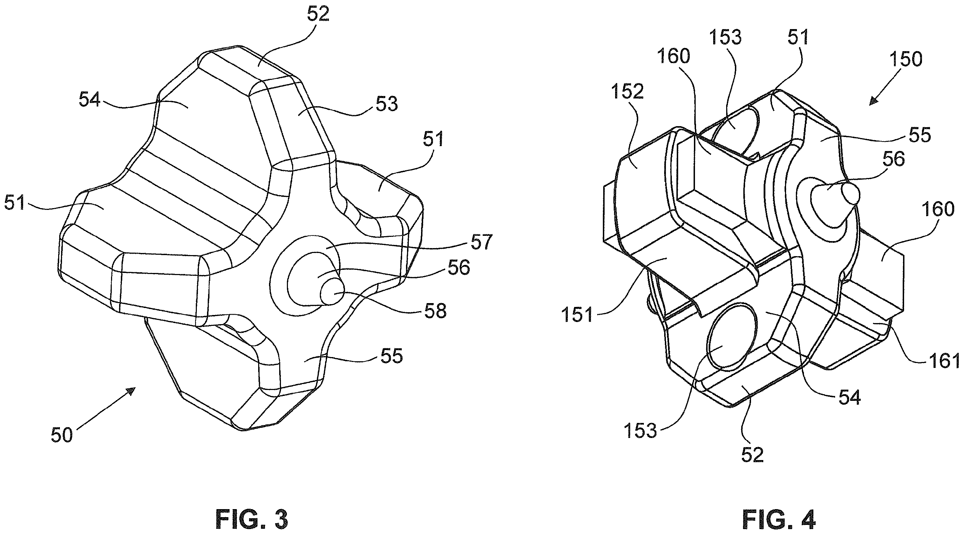

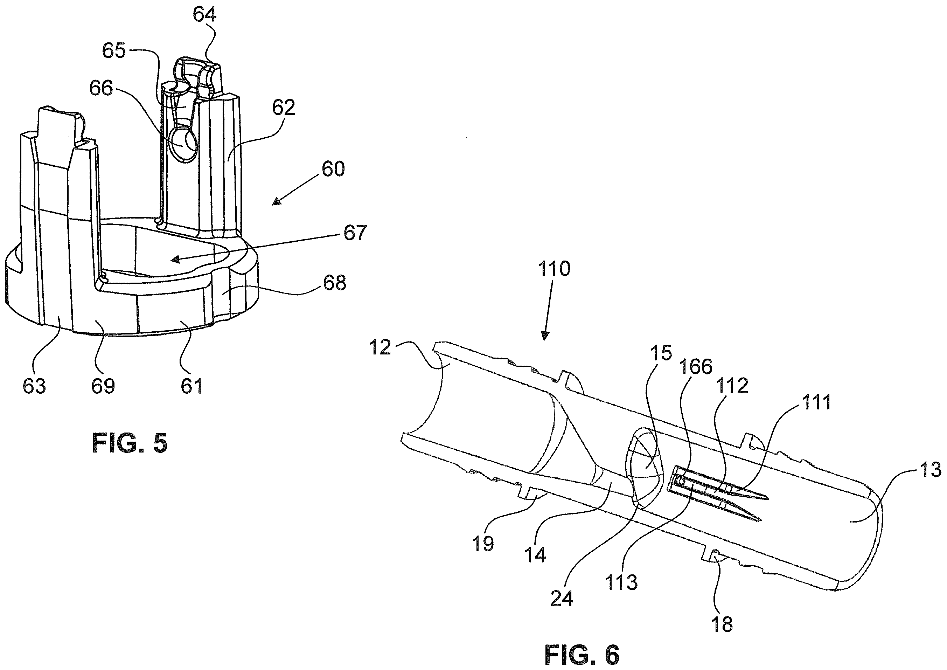

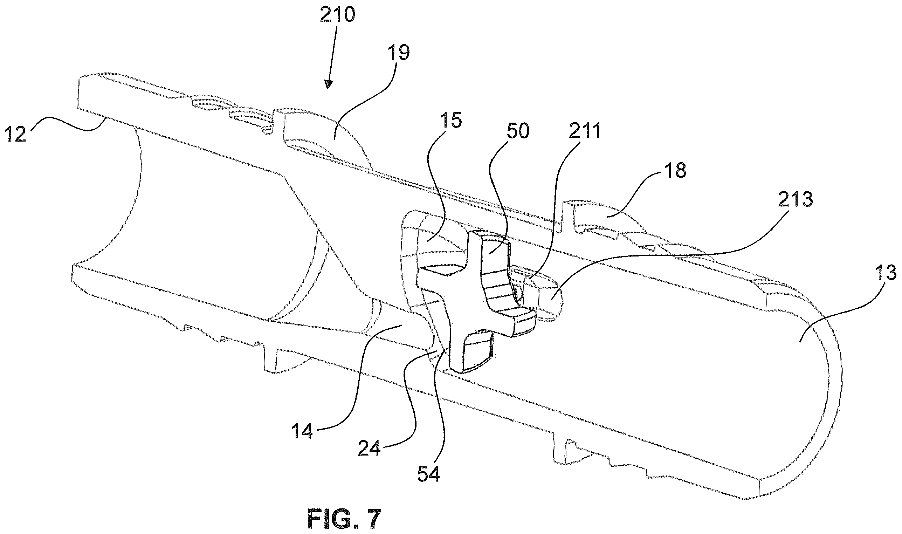

Das Zulaufrohr 12, wie auch das Ablaufrohr 13, weisen einen vorbestimmten Innendurchmesser auf, der vorzugsweise gleich gross ist, beispielsweise 4,1 Millimeter bei einem Aussendurchmesser des Rohrs 11 von 6 Millimeter und einer Länge desselben von ca. 3.3 Zentimeter. Natürlich und wie sich schon aus den circa-Angaben ergibt, sind auch andere Grössen denkbar, je nach benötigter Durchflussmenge. Das Zulaufrohr 12 verengt sich zu einer als Düse wirkenden Verengung 14, die radial versetzt zur Längsachse des Messgehäuses 10 angeordnet ist. Die Längsachse befindet sich in der Zeichenebene der Fig. 2 in Höhe der später noch zu beschreibenden Positionierrippe 16. Die Verengung 14 wird über zwei eine Krümmung aufweisende Übergangsflächen erreicht, zwischen denen ein asymmetrischer Konus angeordnet ist. Die Verengung 14 weist einen Durchmesser auf, der vorzugsweise im Bereich zwischen 20% und 40% des Nenndurchmessers des Zulaufrohres 12 liegt, bei einem Ausführungsbeispiel der oben genannten Art sind dies zum Beispiel 1,33 Millimeter. Die Verengung 14 ist so angeordnet, dass sie die Längsachse des Innenrohres nicht beinhaltet. Gleichzeitig ist sie mit einer kleinen Stufe 24 (siehe Fig. 6 oder 7) gegenüber der Rückwand 15 im Bereich des Ablaufrohres 13 versehen, so dass die Strahlrichtung auf ein stehend in das Messgehäuse 10 eingeschobenes Flügelrad oder Turbine 50 trifft. Die entsprechende Prallfläche 54 ist in der perspektivischen Ansicht des Flügelrades 50 in den Fig. 3 und 4 bezeichnet. Diese Stufe 24 kann in anderen in den Figuren nicht gezeigten Ausführungsbeispielen auch weggelassen werden.

In der Fig. 1 ist das Messgehäuse 10 in eine Ausnehmung 35 des Sensorgehäuses 30 aufgeschoben. Das Sensorgehäuse 30 ohne das Messgehäuse 10 ist in den Fig. 8 und 9 in grösserem Detail dargestellt; das Messgehäuse 10 ohne das Sensorgehäuse 30 in Fig. 10.

Die Lagerung des Messgehäuses 10 in dem Sensorgehäuse 30 in Axialrichtung wird durch die Flansche 18 und 19 sichergestellt, welche von aussen gegen die Seitenwände 31 und 32 des Sensorgehäuses anliegen. Von der unteren Seite her ist in dem Sensorgehäuse 30 eine Zunge 33 vorgesehen, die eine entsprechende Rippe im Aussenrohr 11 hintergreift und somit Messgehäuse 10 und Sensorgehäuse 30 in zwei unterschiedlichen Teilen belässt, was die Trennung des Flüssigkeitslaufes von dem Sensor 90 sicherstellt. Der Sensor 90 ist ein Hallsensor, der in radialer Verlängerung der Achse des stehenden Flügelrades 50 angeordnet ist. Er wird im dargestellten Ausführungsbeispiel in einen entsprechenden Schlitz 36 des Sensorgehäuses 30 eingeschoben und vorzugsweise mit einem isolierenden Silikon abgedichtet. Hierfür ist eine Verbindungsöffnung 44 auf der Oberseite des Sensorgehäuses 30 vorgesehen, durch welchen dieses isolierende Material in den den Sensor 90 aufnehmenden Hohlraum gespritzt werden kann.

In der Schnittzeichnung der Fig. 2 ist im Rohr auf der Ablaufseite 13 eine Positionierrippe 16 dargestellt, die von fast dem Ende des Ablaufrohrs 13 bis zum Bereich der Achse des Flügelrades vorgesehen ist. Es sind in dem dargestellten Ausführungsbeispiel hier zwei Rippen 16, die auf beiden Seiten des Ablaufrohrs 16 in einem Winkel von 180° zueinander angeordnet sind. Bei anderen Ausführungsbeispielen können dies auch drei Rippen 16 in einem Winkelabstand von 120° oder vier Rippen in einem Abstand von 90° sein.

Zu den zwei Rippen 16 gehören dann vier Sperrasten 17, die in einem kleinen Winkel von 40 Grad paarweise zueinander angeordnet sind.

Die Rippen 16 sind dafür vorgesehen, mit den Lagerarmnuten 63 des Lagerkäfigs 60 zusammenzuwirken, der detaillierter in der Fig. 5 dargestellt ist. Der Lagerkäfig 60 wird von der Ablaufrohrseite 13 in das Aussenrohr 11 eingeschoben, bis er hinter den Sperrrasten 17 zu liegen kommt. In dem hier dargestellten Ausführungsbeispiel sind zwei Sperrasten 17 als Höcker in dem Ablaufrohr 13 ausgespritzt, welche in einem Winkel von 90° zu den Positionierrippen 16 stehen. Bei drei Positionierrippen im Winkelabstand von 120° könnten beispielsweise drei Rasten 17 in einem Winkelabstand von 60° zu den Rippen 16 vorgesehen sein. Auch können die Positionierrippen 16 über einen Höcker verfügen oder einen wieder geringer werdende Erhebung über den Innendurchmesser bilden, so dass sie ebenfalls die Festhaltefunktion für den Käfig 60 einnehmen können.

Der in der Fig. 5 dargestellte beispielhafte Lagerkäfig 60 verfügt über einen Ring 61, dessen Aussenwand 69 einen Durchmesser aufweist, der in den Innendurchmesser des Ablaufrohrs 13 passt. An den Ring 61 einstückig angespritzt sind zwei gegenüberliegende Lagerarme 62, die auf ihrer Aussenseite über die besagten Lagerarmnuten 63 verfügen und welche in einem Auflaufansatz 64 enden, bei dem nur noch die Nut 63 besteht und keine führenden Seitenwände mehr bestehen. Die Lagerarme haben eine Länge, dass sie in dem Ablaufrohr 13 vorteilhafterweise entweder an die Endwand der Verengung 14 stossen und so gegenüber den Rasten 17 die axiale Lage des Lagerkäfigs 60 sicherstellen oder dass sie an eine entsprechend als Anschlag hervorgezogene Wand aus der Verengung 14.

Auf der Innenseite der Lagerarme 62 sind an gegenüberliegenden Stellen Lageröffnungen 66 vorgesehen, welche tiefer sind als die zu diesen hin führenden Führungsnuten 65. Diese Führungsnuten 65 gestatten es von dem Auflaufansatz 64 her das Flügelrad 50, beispielsweise nach Fig. 3 oder 4 einzuschieben.

Die Fig. 3 zeigt eine perspektivische Ansicht eines Flügelrades 50 gemäss dem Ausführungsbeispiel der Fig. 1. Das Flügelrad 50 verfügt über vier Flügel 51, die jeweils in der Vorderansicht trapezoid ausgestaltet sind. Sie verfügen also über eine Aussenfläche 52 an die sich beidseits eine abgeschrägte Fläche 53 anschliesst, so dass das Flügelrad in den durch das Innenrohr vorgegebenen Freiraum einpasst. Seitlich sind zwei Seitenwände 55 vorgesehen, auf denen sich mittig ein Lagerkonus 56 erhebt, der von einer verbreiterten Konusbasis ausgeht. Der Abschluss des Lagerkonus 56 ist eine abgerundete Konusspitze.

Das Flügelrad 50 nach Fig. 3 verfügt also über vier Prallflächen 54.

Prinzipiell wäre es auch möglich, ein dreiflügeliges Flügelrad 50 vorzusehen. Flügelräder mit zwei Flügeln weisen als Ausführungsform weniger bevorzugte Eigenschaften auf. Flügelräder mit vier und mehr Flügel sind weitere alternative Ausführungsformen.

Das Flügelrad 50 nach der Fig. 3 ist ein Spritzgussteil aus einem kunststoffgebundenen Magneten, wie der Werkstoff HF 14/22 der Firma Schrammberg (MS-Schrammberg GmbH & Co. KG in DE-870713 Schrammberg-Sulgen). Ein anderer im Spritzgiessverfahren verarbeitbarer spritzgegossener Magnetwerkstoff ist das Produkt Clerablent der Firma Barloc Plastics GmbH aus DE-51766 Engelskirchen, wobei es sich um ferritgefüllte Compounds auf Basis unterschiedlichster Thermoplasten zur Herstellung von magnetischen Funktionsteilen handelt.

In einem anderen Ausführungsbeispiel gemäss Fig. 4 wird ein alternatives Flügelrad 150 dargestellt. Gleiche Merkmale sind in allen Figuren jeweils mit gleichen Bezugszeichen, ähnliche Merkmale mit ähnlichen Bezugszeichen gekennzeichnet. Das Flügelrad 150 verfügt ebenfalls über vier Flügel 51 und Prallflächen 54, wobei hier eine solche Prallfläche eine Angussvertiefung 153 aufweist. Aus Symmetriegründen sind an den gegenüberliegenden Flächen jedes Flügels 51, hier also zweimal zwei Angussvertiefungen 153 vorgesehen.

Der Lagerkonus 56 mit seiner abgerundeten Spitze ist gleich zum Ausführungsbeispiel nach Fig. 3 gestaltet; es handelt sich bei dem hier für das Flügelrad verwendeten Kunststoff allerdings um einen üblichen, nicht magnetischen Spritzgusswerkstoff. Die für den Betrieb des Hallsensors notwendigen Magnetbestandteile sind durch im Spritzguss eingesetzte Magnete 160 in zwei weiteren Flügeln realisiert. Diese weiteren Flügel 151 weisen somit Seitenumspritzungswände 161 um die Magnete 160 auf, während die Aussenfläche 152 im Prinzip der Fläche 52 der anderen Flügel 51 entspricht.

Beide Arten von Flügelrädern 50 oder 150 sind in den Käfig 60 einsetzbar und dieser wird anschliessend hinter die Rasten 17 vorgeschoben.

Anstelle des Konus 56 und der Lageröffnung 66 kann diese Lagerung, insbesondere bei Verwendung eines Lagerkäfigs 60 auch umgekehrt realisiert sein; also, dass die Öffnungen in den Seitenwänden 55 vorgesehen sind und die Koni als Erhebungen an Stelle der Öffnungen 66 in den Seitenarmen 62 realisiert sind. Es ist auch möglich, auf der einen Seite der Turbine eine Erhöhung und auf der anderen eine Vertiefung zu haben.

Bei einem weiteren alternativen Ausführungsbeispiel gemäss Fig. 6 wird eine teilweise aufgeschnittene perspektivische Ansicht eines alternativen Rohres 110 für einen Durchlaufmesser nach einem weiteren Ausführungsbeispiel der Erfindung dargestellt. Zu diesem Rohr 110 als Messgehäuse kann das schon oben beschriebene und in den Fig. 8 und 9 weiterhin dargestellte Sensorgehäuse 30 unverändert übernommen werden, da das Aussenrohr 11 entsprechend mit den Flanschen 18 und 19 versehen sein kann. Das Zulaufrohr 12 und das Ablaufrohr 13 mit der Verengung 14 als Düse dazwischen sind genau so ausgestaltet wie im Ausführungsbeispiel des Rohres 10 nach Fig. 1. Auch ist die Rückwand 15 der Verengung gleich. Im Ablaufrohr selber sind in longitudinaler Richtung die Lageröffnungen 166 vorgesehen, die sich somit in dem Aussenrohr 11 befinden, ohne dieses jedoch zu durchstossen. Die Dimensionen des Konus 56 haben dann etwas länger auszufallen, um für den direkten Einsatz geeignet zu sein. Der Lagerkonus 56 wird dann in der korrekten Orientierung zwischen die Führungsrippen 111 in die Führungsnut 112 eingeführt, wobei sie ohne grosses Spiel in Richtung der Lageröffnung 166 vorgeschoben wird. Dabei läuft sie auf eine Rampe 113 auf, welche nach einem Gleiten des Lagerkonus 56 in die Lageröffnung 166 ein Herausrutschen des Flügelrades 50 sicher verhindert.

Die Fig. 7 zeigt eine teilweise aufgeschnittene perspektivische Ansicht eines alternativen Rohres 210 mit einem eingesetzten Flügelrad 50 für ein Durchlaufmesser nach einem weiteren Ausführungsbeispiel der Erfindung. Auch hier handelt es sich um eine käfigfreie Lösung, wo die Lageröffnungen in einer Führungserhebung 211 eingelassen sind, die lediglich über eine seitliche Rampe 213 verfügt, über welche die Lagerkoni 56 eingeführt werden. Für eine praktische Ausgestaltung kann hierbei ein Flügel 51 des Flügelrades 50, hier der in Longitudinalrichtung des Ablaufrohrs 13 ausgerichtete Flügel 51, durch eine Pinzette gehalten und in das Rohr 13 in die in der Fig. 7 dargestellte Position eingeschoben werden, wenn dabei das Messrohr zur Montage mit einer äusseren Kraft gezielt verformt wird. In der Fig. 7 ist zudem gut zu erkennen, dass an der Rückwand 15 eine kleine Stufe 24 besteht, so dass die Hauptstrahlrichtung, die durch die Verengung 14 vorgegeben ist, auf die Prallfläche 54 zentral trifft. Auch bei dieser alternativen Lösung müsste der Konus etwas länger ausfallen.

Die Fig. 8 und 9 zeigen eine perspektivische Ansicht des Sensorgehäuses 30. In der Fig. 8 ist gut die Aufnahme 35 mit der Aufnahmerückwand 34 zu erkennen, wobei diese Aufnahmerückwand 34 zwei getrennte Rippen sind, die durch die Endkanten der Seitenwände 31 bzw. 32 gebildet werden. Gleichzeitig verfügt die Aufnahme 35 über eine obere und untere Begrenzung gegen die die in der Fig. 10 zu erkennenden Oberseiten 22 bzw. Vorder- oder Rückseite 23 des Aussenrohres 11 stossen. Durch die an der Aufnahmerückwand 34 vorgesehenen Stufen 45 ergibt sich im Zusammenspiel mit der Arretierzunge 33 eine Abziehsicherung und ggf. eine Klemmung des Aussenrohres 11 in dem Sensorgehäuse 30.

Mit dem Bezugszeichen 36 ist die von dieser Seite vorzunehmende Bestückung des Gehäuses 30 mit dem Hallsensor 90 zu erkennen. Auf der gegenüberliegenden Rückseite des Sensorgehäuses 30 ist die entsprechende Steckeraufnahme 37 zu erkennen, wo dann der Leiterführung 42 der elektrische Kontakt mit dem Hallsensorkontakten vorgenommen wird. Die Führungsrippe 43 gewährleistet ein richtiges Einstecken des Steckers in die Öffnung 37.

Die Verbindungsaufnahme 38 enthält eine über die Rückseite des Sensorgehäuses 30 hinausstehende Arretierzunge 39 zur Montage des Steckergehäuses in einem den Durchflussmesser benötigendes Gerät. Mit dem Bezugszeichen 41 ist eine weitere Öffnung bezeichnet, bei der es sich um eine Entformungsfreistellung für die Arretierzung 33 im Spritzgiessprozess handelt.

Die Fig. 10 schliesslich zeigt eine perspektivische Ansicht des Messgehäuses 10 des Durchflussmessers nach Fig. 1. Dabei ist zu erkennen, dass die Gegenflansche 19 zwei nicht kreisrunde Flansche sind, wie der Flansch 18, und dass die Orientierungsnut 21 zudem mit einer Brücke 25 versehen ist, um den richtigen Einbau des Messgehäuses in das Sensorgehäuse 30 sicherzustellen. Um also die Lage des Messrohres 10 in der Automation der Montage zu erkennen, ist ein Flansch vergrössert. Um nun zusätzlich in Bezug auf die Rotation die Lage der Verengung/Düse zu erkennen, wird der Steg 25 genutzt, welcher mit einem optischen Sensor bei der Montage detektiert werden kann, wenn das Gerät um 180° verschoben eingebaut worden ist.

Der Unterschied zwischen den Ausführungsbeispielen mit Lagerkäfig 60 oder ohne Lagerkäfig 60 kann wie folgt zusammengefasst werden. Bei einem Ausführungsbeispiel ohne Lagerkäfig 60 wird das Messrohr 11 des Gehäuses 10 oder 110 so deformiert, dass sich die Lagerstelle vergrössert, so dass das Flügelrad 50 oder 150 montiert werden kann. Sobald das Flügelrad 50 oder 150 an der Montageposition ist und der Lagerkonus 56 auf beiden Seiten in den Lagerstellen 166 liegt, wird diese Deformation wieder rückgängig gemacht, was durch eine einfache Kraftwegnahme und eine elastische Deformation realisiert wird.

Bei der Verwendung des Lagerkäfigs wird dagegen das Flügelrad 50 zuerst in diesem Lagerkäfig 60 montiert und anschliessend in das Rohr 11 von der Ablaufseite 13 her eingeschoben. Die axiale Montage erfolgt über die vier Rasten 17. Es können prinzipiell auch nur zwei Rasten 17 vorgesehen sein. Am Lagerkäfig 60 selber ist für das Einschieben über die vier Rasten 17 eine federnde Partie vorgesehen, die mit den halbrunden Nuten 68 realisiert ist. Die Drehposition selber, also das Stehen des Flügelrades in der richtigen Orientierung, wird über die seitlichen Stege definiert, welche Nuten im Lagerkäfig 60 entsprechen.

Das Messrohr 11 besitzt auf der Zulaufrohrseite 12 die besagte Verengung 14 als Düse, mit welcher der Messbereich festgelegt wird. Verschiedene Düsendurchmesser führen zu Änderungen der Strömungsgeschwindigkeit der durchfliessenden Flüssigkeiten. Ferner kann so die Vorrichtung an eine Änderung der zu messenden Strömungsgeschwindigkeit angepasst werden.

Das rotierende Magnetfeld bei dem rotierenden Flügelrad 50 wird von einem Halleffektsensor detektiert, welcher in der Öffnung 36 in dem Gehäuse 30 eingeschoben ist. Hier können neben der vorgestellten Steckerlösung mit direkter Kontaktierung des Gegensteckers auf dem Anschluss des Halleffektsensors auch ein Kabel vorgesehen sein oder eine direkte Leiterplattenmontage. Die Trennung zwischen Gehäuse 30 und Rohr 10 dient zudem als doppelte Isolationsschicht.

Um den Kontaktpunkt der Lagerung des Flügelrades 50 auf einem möglichst geringen Durchmesser zu halten, werden vorzugsweise zwei unterschiedliche Kegelwinkel verwendet. Bei dem Lagerzapfen beträgt der Winkel des Konus 56 gegenüber der Drehachse beispielsweise 40°, wohingegen die Lagerschale, gebildet durch die Lageröffnung 66 einen einfachen Winkel gegen die Drehachse von 45° aufweist.

Bei Verwendung von einem umspritzten Magneten 160 beim Flügelrad 150 wird nur ein Magnetpolpaar verwendet. Dies gestattet eine Limitierung der Impulszahl, welche bei der Grösse eines Baumusters mit den im Ausführungsbeispiel genannten Massen mit einem Durchfluss von einem Liter pro Minute ungefähr und als Grössenordnung 22'200 Impulse gibt.

Rohr 10, 110, Gehäuse 30 und Lagerkäfig 60 sind vorteilhafterweise Spritzgussteile; gegebenenfalls beim Flügelrad aus einem permanentmagnetischen Werkstoff.

Der Durchmesser des Flügelrades 50 ist etwas kleiner als der Innendurchmesser des Ablaufrohrs 13, in welches er eingeführt ist. Dabei bedeutet das Merkmal Durchmesser des Flügelrades 50, dass das Flügelrad 50 über jeweils einander gegenüberliegende Aussenflächen 52 radial gesehen einen so gemessenen Durchmesser aufweist oder dieser Durchmesser wird durch den Abstand zwischen den Flächen 152 ermittelt. Dabei ist dieser Umkreis-Durchmesser des Flügelrades 50 kleiner als der oder jeder Innendurchmesser des Ablaufrohrs 13. Dieser Umkreisdurchmesser definiert den dem Flügelrad 50 entsprechenden Aussendurchmesser eben zwischen den durch die Nabe gegenüber liegenden Flächen 52-52 bzw. 152-152. Er ist kleiner als der Nenninnendurchmesser des Ablaufrohrs 13, was zweierlei bedeutet. Zum einen ist der Nenndurchmesser der Durchmesser des Ablaufrohrs 13 (oder siehe unten: des Zulaufrohrs 12), den dieses Rohr über einen wesentlichen Teil aufweist. Dabei werden die Einsätze wie der Lagerkäfig 60 etc. nicht beachtet. Durch diesen grösseren Nenndurchmesser kann das Flügelrad 50 über diesen Weg in das Messgehäuse eingeschoben werden, was in Bezug auf die Dichtheit und den Abschluss gegenüber dem Sensorgehäuse 30 Vorteile bringt.

Da vorteilhafterweise insbesondere das Zulaufrohr 12 einen gegenüber dem Ablaufrohr 13 ähnlichen oder gleichen Durchmesser aufweist, ist der Durchmesser des Flügelrades 50 auch kleiner als der Innendurchmesser des Zulaufrohrs 12. Damit ist es möglich, ein einstückiges Zulauf-/Ablaufrohr 12/13 wie in Fig. 6 im Schnitt dargestellt anzugeben, welches im Wesentlichen eine zylindrischen Aussenform hat, wie in Fig. 10 dargestellt, welche lediglich durch Anschlussrippen und -flansche unterbrochen ist, und ein gleicher Aussendurchmesser vorgesehen ist, auf den die Anschlusschläuche (nicht dargestellt) aufgeschoben werden können. Es besteht insbesondere kein über den wie oben definierten Durchmesser das Flügelrades 50 überstehendes Messgehäuse 110. Somit ergibt sich ein verminderter Platzbedarf für das Messgehäuse 110 im Gegensatz zu den Ausführungen des Standes der Technik. Dieses Messgehäuse 110 kann dann seitlich in eine Ausnehmung 35 des Sensorgehäuses 30 eingeschoben und arretiert und insbesondere eingeklipst werden, so dass eine sehr einfache und platzsparende Verlegung des dann den Sensor umfassenden zuführenden und wegführenden Schlauch mit dazwischenliegendem Messgehäuse 110 möglich ist.

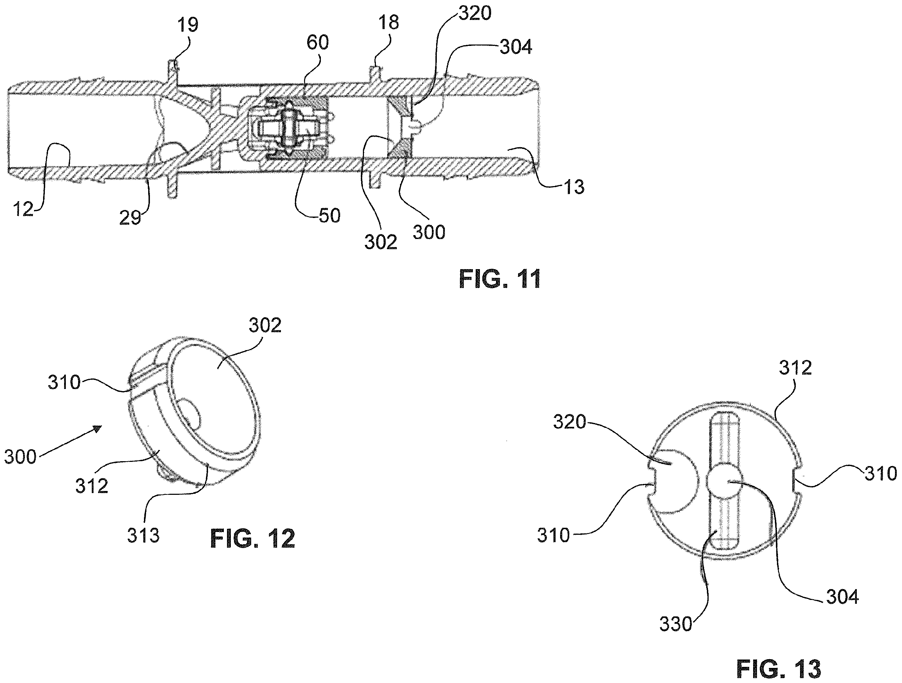

Die Fig. 11 zeigt einen Querschnitt durch ein Ausführungsbeispiel eines Messgehäuses 10 mit einem Flügelrad 50, wobei im Ablaufrohr 13 selber auch eine Durchflussblende 300 eingesetzt ist. Die Fig. 12 zeigt eine perspektivische Ansicht der Durchflussblende 13 aus Fig. 11 und die Figur 13 eine Draufsicht auf diesen.

Die Durchflussblende 300 weist auf seiner zum Flügelrad 50 weisenden Seite einen Reduzierkegel 302 auf, der den Durchmesser des Innenrohres des Abflusses 13 auf die Grösse der Durchlassöffnung 304 vermindert. Die Grösse der Durchlassöffnung 304 ist in der Grössenordnung der auf Zulaufsrohrseite 12 nach dem dortigen Reduzierkegel 29 verbleibenden Öffnung. Mit der dortigen Verengung 14 als Düse wird der Messbereich des Messgeräts festgelegt. Auf dieser Seite wird die Messgenauigkeit durch Vermeiden von Rückschlageffekten durch die Pumpenwirkung erhöht.

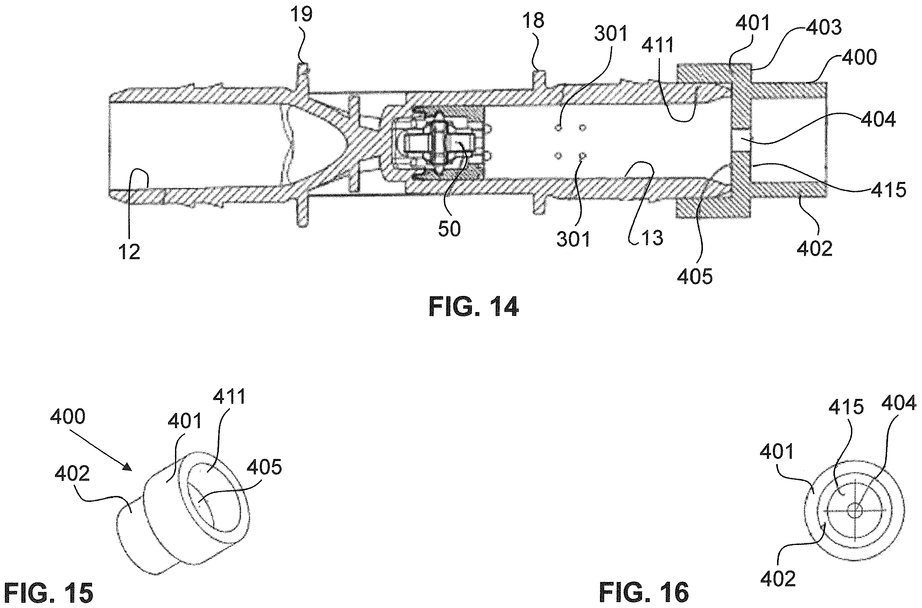

Es wird kurz auf die Fig. 14 verwiesen, die im Querschnitt vier der insgesamt acht Positioniernoppen 301 zeigt, an denen die Durchflussblende befestigt ist. Dabei wird die Durchflussblende 300 im Rohr mittels einer radialen Pressung und über die Noppen 301 axial gehalten.

Die Durchflussblende 300 verfügt über eine Umkreiswand 312, die passgenau in den Innendurchmesser des Abflussrohrs 13 angepasst ist. Sie verfügt über zwei gegenüberliegende Nuten 310 zur Aufnahme der Arretierelemente. Zum einfacheren Einführen in das Abflusrohr 13 ist die Umkreiswand 312 mindestens an der Einführseite 313 abgeschrägt. Auf der zum Ausfluss weisenden Seite ist eine seitliche zur Nut 310 reichenden Vertiefung 320 vorhanden, bei der es sich im hier dargestellten Ausführungsbeispiel um eine Anspritzstelle des Spritzgusteils handelt. Radial zur Durchlassöffnung 304 ist eine Rippe 330 vorgesehen, welche das Handhaben des Durchflussverminders 300 durch Ergreifen mittels eines zangenförmigen Gegenstandes zur Einführung in das Abflussrohr 13 erleichtert.

Die Fig. 14 zeigt ein anderes Ausführungsbeispiel zur Montage einer Durchflussblende 400 aussen auf das Abflussrohr 13. Die Fig. 15 zeigt die Durchflussblende 400 in der perspektivischen Ansicht und die Fig. 16 in einer Draufsicht von der Abflussseite her.

Die Durchflussblende 400 verfügt ebenfalls über eine durchgängige Durchgangsöffnung 404 ähnlich zu der oben genannten Durchlassöffnung 303. Sie ist in einer zwei aneinander angrenzende einstückig verbundene Hülsen 401 und 402 verbindenden Wand mit den beiden den Durchmesser begrenzenden Seitenflächen 405 und 415 insbesondere mittig angeordnet. Die Wand 405/415 geht abflussseitig in die vorteilhafterweise engere abflussseitige Hülse 402 über, die insbesondere den Durchmesser ähnlich dem Abflussrohr 13 aufweisen kann. Hier ist die die Durchflussöffnung 404 aufweisende Wand auf beiden Seiten eine flache, dem Radius folgende Seitenfläche im Gegensatz zum Kegel 302 auf der Innenseite der Durchflussblende 300. Es ist möglich, auch bei der Durchflussblende 300 eine glatte zuflussseitige Wand zu haben und bei diesem Ausführungsbeispiel einen Kegel.

Auf der Rohrseite ist eine im Innendurchmesser grössere rohrseitige Hülse 401 vorgesehen, die insbesondere im Klemmsitz auf der Aussenwand des Abflussrohrs 13 aufsitzt. Dabei stösst das Abflussrohr 13 gegen die Innenwand 405, die eine Schulter bildet. Zwischen den beiden Hülsen 401 und 402 ist eine Schulter 403 vorgesehen, die jedoch auch durch einen Übergang realisiert werden könnte. Das Abflussrohr sitzt unter Spannung auf der Innenwand 411 der Hülse 401.

Die Durchflussblende 300 oder 400 ist abflussseitig angeordnet und somit ist das Flügelrad 50 auf beiden Seiten durch eine Verengung 14 bzw. 304/404 begrenzt. Wo die Düse 14 auf der Zuflussseite den Messbereich festlegt, verbessert die Verengung 304/404 die Messung, da üblicherweise beim Einsatz dieser Durchflussmesser die die Flüssigkeit pumpende Vorrichtung sozusagen als Saugpunkte stromabwärts angeordnet ist. Diese Pumpe arbeitet in der Regel in einer gewissen Taktweise, die einen unterschiedlichen Unterdruck auf der Abflussseite des Messgeräts erzeugt. Durch diesen wechselnden Unterdruck kann eine Verfälschung des Messergebnisses herbeigeführt werden. Durch den Einsatz der Durchflussblende 300/400 auf der Abflussseite wird dieser Einfluss vermindert, insbesondere, weil die den Durchfluss bestimmende Verengung 14 als auf das Flügelrad 50 ausgerichtete Düse dem Abflussdurchmesser durch die Verengung 304/404 entspricht.

Das Element 300 beziehungsweise 400 ist als Durchflussblende bezeichnet worden. Es erzeugt am Ausgang einen Druckverlust und damit einen verminderten Durchfluss durch seine Verengung 304 oder 404. Der Durchmesser der Öffnung der Durchflussblende ist grösser als oder mindestens in der Grössenordnung von deren Länge in Rohrrichtung. Die dahinter stromabwärts liegende Pumpe kann den diesen Druckverlust aber ausgleichen; der Durchflussmesser ist ja auf der Ansaugseite der Pumpe eingebaut.

**BEZUGSZEICHENLISTE**

| | | | |
|---|---|---|---|
| 10 | Messgehäuse | 54 | Prallfläche |
| 11 | Aussenrohr | 55 | Seitenwand |
| 12 | Zulaufrohr | 56 | Lagerkonus |
| 13 | Ablaufrohr | 57 | verbreiterte Konusbasis |
| 14 | Verengung | 58 | runde Konusspitze |
| 15 | Rückwand der Verengung | 60 | Lagerkäfig |
| 16 | Positionierrippe | 61 | Ring |
| 17 | Sperrraste | 62 | Lageraarm |
| 18 | Flansch | 63 | Lagerarmnut |
| 19 | Gegenflansch | 64 | Auflaufansatz |
| 21 | Orientierungsnut | 65 | Führungsnut |
| 22 | Oberseite | 66 | Lageröffnung |
| 23 | Vorder/Rückseite | 67 | ovaler Durchbruch |
| 29 | Reduzierkegel | 68 | federnde Partie |
| 30 | Sensorgehäuse | 69 | Aussenwand |
| 31 | Seitenwand | 90 | Hallsensor |
| 32 | Seitenwand | 110 | Messgehäuse |
| 33 | Arretierzunge | 111 | Führungsrippe |
| 34 | Aufnahmerückwand | 112 | Führungsnut |
| 35 | Aufnahme | 113 | Rampe |
| 36 | Sensoraufnahme | 150 | Flügelrad |
| 37 | Steckeraufnahme | 151 | Flügel |
| 38 | Verbindungsaufnahme | 152 | Aussenfläche |
| 39 | Arretierzunge | 153 | Angussvertiefung |
| 41 | Entformungsfreistellung | 160 | Magnet |
| 42 | Leiterführung | 161 | Seitenumspritzung |
| 43 | Führungsrippe | 166 | Lageröffnung |
| 50 | Flügelrad | 210 | Messgehäuse |
| 51 | Flügel | 211 | Führungserhebung |
| 52 | Aussenfläche | 213 | Rampe |
| 53 | abgeschrägte Fläche | 300 | Durchflussblende |
| 301 | Noppe | 401 | rohrseitige Hülse |
| 302 | Reduzierkegel | 402 | abflussseitige Hülse |
| 304 | Durchlassöffnung | 403 | Schulter |
| 310 | Haltenut | 404 | Durchlassöffnung |
| 312 | Umkreiswand | 405 | Innenschulter |
| 313 | Abschrägung | 411 | Innenwand |
| 320 | Vertiefung | 415 | Innenschulter |
| 330 | Rippe | | |
| 400 | Durchflussblende | | |

## Patentansprüche

1. Durchflussmesser für Flüssigkeiten, mit einem ein Flügelrad (50; 150) umschliessenden und dieses drehbar lagernden Messgehäuse (10; 110), einem Zulaufrohr (12), einem Ablaufrohr (13), mindestens einem dem Flügelrad (50; 150) zugeordneten Sensorgeber (50; 160) und einem am Messgehäuse (10; 110) vorgesehenen, auf den Sensorgeber (50; 160) ansprechenden Sensor (90) zur Ermittlung der durch das Messgehäuse (10; 110) strömenden Flüssigkeitsmenge aufgrund der Umdrehungen des Flügelrades (50; 150), wobei das Messgehäuse (10; 110) ein das Zulaufrohr (12) und das Ablaufrohr (13) einstückig umfassendes Rohr (11) ist, wobei in dem Messgehäuse (10; 110) zwischen Zulaufrohr (12) und Ablaufrohr (13) eine düsenbildende Verengung (14) exzentrisch angeordnet ist, wobei das Flügelrad (50; 150) im Ablaufrohr (13) hinter der düsenbildenden Verengung (14) drehbar gelagert ist, wobei der dem Flügelrad (50) entsprechende Aussendurchmesser (52-52; 152-152) kleiner als der Nenninnendurchmesser des Ablaufrohrs (13) ist, wobei das Flügelrad (50; 150) in der Draufsicht in axialer Rohrichtung in jeder Drehposition über eine Aussenfläche (52; 53) derart verfügt, dass das Flügelrad (50; 150) in den durch den Innendurchmesser des Ablaufrohrs (13) vorgegebenen Freiraum passt, wobei das Flügelrad (50; 150) über zwei Seitenwände (55) verfügt, auf denen axial mittig jeweils ein Lagerelement (56) vorgesehen ist, welches einem dem Ablaufrohr (13) zugeordneten Drehlager (66; 166) zugeordnet ist.

2. Durchflussmesser nach Anspruch 1, **dadurch gekennzeichnet, dass** das Lagerelement (56) jeweils ein Lagerkonus (56) ist und dass die Drehlager (166) in oder vor der Wand des Ablaufrohrs (13) vorgesehen sind.

3. Durchflussmesser nach Anspruch 1, **dadurch gekennzeichnet, dass** im Ablaufrohr (13) mindestens eine, insbesondere zwei, Positionierrippe (16) vorgesehen ist, auf die ein Lagerkäfig (60) für das Flügelrad (50; 150) aufschiebbar (63) ist.

4. Durchflussmesser nach Anspruch 3, **dadurch gekennzeichnet, dass** mindestens zwei Sperrrasten (17) für das Halten des Lagerkäfigs (60) in seiner axialen Lage vorgesehen sind.

5. Durchflussmesser nach Anspruch 3 oder 4, **dadurch gekennzeichnet, dass** der Lagerkäfig (60) über gegenüberliegende Lagerarme (62) verfügt, in denen die Lager (66) vorgesehen sind.

6. Durchflussmesser nach einem der Ansprüche 1 bis 5, **dadurch gekennzeichnet, dass** das Flügelrad (50; 150) drei oder vier Flügel (51) hat.

7. Durchflussmesser nach einem der Ansprüche 1 bis 6, **dadurch gekennzeichnet, dass** das Flügelrad (50) ein Spritzgussteil ist, wobei es mindestens in den Flügeln (51) aus einem permanentmagnetischen Spritzgusskunststoff besteht.

8. Durchflussmesser nach einem der Ansprüche 1 bis 6, **dadurch gekennzeichnet, dass** das Flügelrad (150) ein Spritzgussteil ist, wobei mindestens ein Flügel (51) einen mindestens teilumspritzten Permanentmagneten (160) aufweist.

9. Durchflussmesser nach einem der Ansprüche 1 bis 8, **dadurch gekennzeichnet, dass** der Sensor (90) einen Hallsensor ist oder Reed-Schalter umfasst.

10. Durchflussmesser nach einem der Ansprüche 1 bis 9, **dadurch gekennzeichnet, dass** der dem Flügelrad (50) entsprechende Aussendurchmesser (52-52; 152-152) kleiner als der Nenninnendurchmesser des Zulaufrohrs (12) ist.

11. Durchflussmesser nach einem der Ansprüche 1 bis 10, **dadurch gekennzeichnet, dass** abflusseitig eine Durchflussblende (300, 400) vorgesehen ist, der eine Durchflussöffnung (304, 404) in der Grössenordnung der düsenbildenden Verengung (14) im Zulaufrohr aufweist.

12. Durchflussmesser nach Anspruch 11, **dadurch gekennzeichnet, dass** die Durchflussblende ein in das Ablaufrohr (13) einzurastender Einsatz (300) oder ein auf das Ablaufrohr (13) aufzusetzender Aufsatz (400) ist.

## Claims

1. A flowmeter for liquids, having a measuring housing (10; 110) which encloses and rotatably mounts an impeller (50; 150), a supply pipe (12), a discharge pipe (13), at least one sensor encoder (50; 160) which is assigned to the impeller (50; 150), and a sensor (90) which is provided on the measuring housing (10; 110) and responds to the sensor encoder (50; 160) and has the purpose of determining the amount of fluid flowing through the measuring housing (10; 110), on the basis of the revolutions of the impeller (50; 150), wherein the measuring housing (10; 110) is a pipe (11) which comprises the supply pipe (12) and the discharge pipe (13) in one piece, wherein a nozzle-forming constriction (14) is arranged eccentrically in the measuring housing (10; 110) between the supply pipe (12) and the discharge pipe (13), wherein the impeller (50; 150) is rotatably mounted in the discharge pipe (13) downstream of the nozzle-forming constriction (14), wherein the outer diameter (52-52; 152-152) corresponding to the impeller (50) is smaller than the nominal inner diameter of the discharge pipe (13), wherein the impeller (50; 150) has, in the plan view in the axial pipe direction an outer face (52; 53) in each rotational position, such that the impeller (50; 150) fits into the free space provided by the discharge pipe (13), wherein the impeller (50; 150) has two side walls (55), on each of which a bearing element (56) is provided axially in the center, said bearing element (56) being assigned to a rotary bearing (66; 166) which is assigned to the discharge pipe (13).

2. The flowmeter as claimed in claim 1, **characterized in that** the bearing element (56) is in each case a bearing cone (56), and **in that** the rotary bearings (166) are provided in or in front of the wall of the discharge pipe (13).

3. The flowmeter as claimed in claim 1, **characterized in that** at least one positioning fin (16), in particular two positioning fins (16) are provided in the discharge pipe (13) onto which positioning fins (16) a bearing cage (60) for the impeller (50; 150) can be fitted (63).

4. The flowmeter as claimed in claim 3, **characterized in that** at least two ratchet pawls (17) for securing the bearing cage (60) in its axial position are provided.

5. The flowmeter as claimed in claim 3 or 4, **characterized in that** the bearing cage (60) has bearing arms (62) which lie opposite one another and in which the bearings (66) are provided.

6. The flowmeter as claimed in one of claims 1 to 5, **characterized in that** the impeller (50; 150) has three or four blades (51).

7. The flowmeter as claimed in one of claims 1 to 6, **characterized in that** the impeller (50) is an injection molded part wherein it is composed of a permanently magnetic injection molded plastic, at least in the blades (51).

8. The flowmeter as claimed in one of claims 1 to 6, **characterized in that** the impeller (150) is an injection molded part, wherein at least one blade (51) has a permanent magnet (160) which is at least partially enclosed by injection molding.

9. The flowmeter as claimed in one of claims 1 to 8, **characterized in that** the sensor (90) comprises a Hall sensor or Reed switch.

10. The flowmeter as claimed in one of claims 1 to 9, **characterized in that** the outer diameter (52-52; 152-152) corresponding to the impeller (50) is smaller than the nominal inner diameter of the supply pipe (12).

11. The flowmeter as claimed in one of claims 1 to 10, **characterized in that** on the discharge side a throughflow restrictor (300, 400) is provided which has a throughflow opening (304, 404) in the order of magnitude of the nozzle-forming constriction (14) in the supply pipe.

12. The flowmeter as claimed in claim 11, **characterized in that** the throughflow restrictor is an insert (300) which is to be engaged in the discharge pipe (13) or an attachment (400) which is to be fitted onto the discharge pipe (13).

## Revendications

1. Débitmètre pour liquides, comprenant un boîtier de mesure (10 ; 110) qui entoure une roue à aubes (50 ; 150) et qui est monté rotatif, un tube d'entrée (12), un tube de sortie (13), au moins un encodeur de capteur (50 ; 160) associé à la roue à aubes (50 ; 150) et un capteur (90) prévu sur le boîtier de mesure (10 ; 110) qui répond au encodeur de capteur (50 ; 160) et est destiné à déterminer le débit de liquide traversant le boîtier de mesure (10 ; 110) en raison des révolutions de la roue à aubes (50 ; 150), où le boîtier de mesure (10 ; 110) étant un tube (11) qui entoure intégralement le tube d'entrée (12) et le tube de sortie (13), un étranglement (14) formant buse étant disposé excentriquement dans le boîtier de mesure (10 ; 110) entre le tube d'entrée (12) et le tube de sortie (13), la roue à aubes (50 ; 110) étant disposée derrière l'étranglement (14) formant buse dans le tube de sortie (13) de manière rotative, où le diamètre extérieur (52-52 ; 152-152) correspondant à la roue à aubes (50) étant inférieur au diamètre intérieur nominal du tube de sortie (13), la roue à aubes (50 ; 150) étant montée d'une manière rotative dans la vue en plan dans la direction axiale du tube dans chaque position rotative via une surface externe (52 ; 53) de telle sorte que la roue à aubes (50 ; 150) s'insère dans l'espace libre prédéterminé par le diamètre intérieur du tube de sortie (13), la roue à aubes (50 ; 150) ayant deux parois latérales (55) sur chacune desquelles est prévu axialement au centre un élément de palier (56), qui est affecté à un palier pivot (66 ; 166) affecté au tube de sortie (13).

2. Débitmètre selon la revendication 1, **caractérisé en ce que** l'élément porteur (56) est à chaque fois un cône de palier (56) et **en ce que** les paliers pivotants (166) sont prévus dans ou devant la paroi du tube de sortie (13).

3. Débitmètre selon la revendication 1, **caractérisé en ce qu'**il est prévu dans le tube de sortie (13) au moins une, en particulier deux, nervures de positionnement (16), sur lesquelles une cage de palier (60) pour la roue à aubes (50 ; 150) peut être enfoncée (63).

4. Débitmètre selon la revendication 3, **caractérisé en ce qu'**il est prévu au moins deux crans de blocage (17) pour maintenir la cage de palier (60) dans sa position axiale.

5. Débitmètre selon la revendication 3 ou 4, **caractérisé en ce que** la cage de palier (60) présente des bras de palier (62) opposés dans lesquels sont prévus les paliers (66).

6. Débitmètre selon l'une quelconque des revendications 1 à 5, **caractérisé en ce que** la roue à aubes (50 ; 150) présente trois ou quatre aubes (51).

7. Débitmètre selon l'une quelconque des revendications 1 à 6, **caractérisé en ce que** la roue à aubes (50) est une pièce moulée par injection constituée au moins dans les aubes (51) d'un plastique moulé par injection qui présente une magnétisation permanente.

8. Débitmètre selon l'une quelconque des revendications 1 à 6, **caractérisé en ce que** la roue à aubes (150) est une pièce moulée par injection, au moins une roue (51) comportant un aimant permanent (160) au moins partiellement enrobé par injection.

9. Débitmètre selon l'une quelconque des revendications 1 à 8, **caractérisé en ce que** le capteur (90) est un capteur à effet Hall ou comporte un commutateur Reed.

10. Débitmètre selon l'une quelconque des revendications 1 à 9, **caractérisé en ce que** le diamètre extérieur (52-52 ; 152-152) correspondant à la roue à aubes (50) est inférieur au diamètre intérieur nominal du tube d'entrée (12).

11. Débitmètre selon l'une quelconque des revendications 1 à 10, **caractérisé en ce qu'**un orifice d'écoulement (300, 400) est prévu sur le côté refoulement qui présente une ouverture d'écoulement (304, 404) dans l'ordre de grandeur de l'étranglement (14) formant buse dans le tube d'entrée.

12. Débitmètre selon la revendication 11, **caractérisé en ce que** l'orifice d'écoulement est un insert (300) à encliqueter dans le tube de sortie (13) ou un accessoire (400) à placer sur le tube de sortie (13).
